# NEUE EUROPÄISCHE PATENTSCHRIFT

(11) **EP 0 283 571 B2**
(45) Veröffentlichungstag und Bekanntmachung des Hinweises auf die Entscheidung über den Einspruch: **27.11.1996**
(45) Hinweis auf die Patenterteilung: 28.08.1991
(21) Anmeldenummer: 87118146.7
(22) Anmeldetag: 08.12.1987
(51) Int. Cl.: B60N 2/50

(54) **Fahrgastsitz**
Passenger seat
Siège de passager

(30) Priorität: 25.03.1987 DE 8704426 U
(43) Veröffentlichungstag der Anmeldung: 28.09.1988
(73) Patentinhaber: Ignaz Vogel GmbH & Co KG, Fahrzeugsitze, D-76228 Karlsruhe (DE)
(72) Erfinder: Vogel, Ignaz, Dipl.-Ing., D-7500 Karlsruhe 41-Stu. (DE)
(74) Vertreter: Trappenberg, Hans

(56) Entgegenhaltungen:
- EP-A- 0 042 565
- EP-A- 0 263 189
- DE-A- 1 900 079
- DE-A- 2 204 076
- DE-A- 2 341 481
- DE-A- 2 549 710
- DE-A- 3 147 045
- DE-U- 1 975 073
- ES-D- 105 746
- ES-D- 106 338
- ES-D- 106 339
- ES-D- 108 550
- ES-D- 108 551
- ES-D- 108 552
- ES-D- 109 099
- ES-D- 109 333
- ES-D- 110 060
- US-A- 4 109 959
- US-A- 4 167 285
- MAIER, "Liste de stock 1973 - 74"
- Prospekt der Fa. PERFIL EN FRIO, S.A., "perfiles tubulares para carpinteria y cerrajeria"
- Prospekt der Fa INDUSTRIAS ESTEBAN, S.A. "CIVIC 2.000/1 CONFORT EUROPEO"

## Beschreibung

Die Erfindung betrifft einen Fahrgastsitz zum Einbau in Lang-, Wasser- und Luftfahrzeuge, gebildet aus einem Sitzuntergestell, bestehend aus beidseitigen Stützfüßen, auf denen ein aus mindestens zwei Profilstäben gebildeter Querbügel befestigbar ist, auf dem ein Sitzteil und ein mit ihm starr oder verschwenkbar verbundenes Rückenteil angebracht ist, wobei die Profilstäbe aus mindestens zwei Gurten und einem Steg gebildete Holme sind, die mit Befestigungsstäben mit Bohrungen versehen sind.

Bei bekannten derartigen Fahrgastsitzen bestehen die Profilstäbe aus Befestigungsschiene, die es ermöglichen, sowohl sie Stützfüße wie auch die Sitzteile in beliebigem Anstand voneinander zu befestigen. Diese Befestigungsschienen müssen jedoch verhältnismäßig schwer ausgebildet sein, da sie nicht nur eine sichere Befestigung dieser anzuschraubenden Telle gewährleisten und auch das Gewicht Platz nehmender Personen aufnehmen müssen, sondern auch den besonderen Bestimmungen genügen müssen, die an derartige Fahrgastsitze gestellt werden. Diese Bestimmungen resultieren daraus, daß auf solche Fahrgastsitze nicht nur das Gewicht der Platz nehmenden Personen einwirkt, sondern daß auch, insbesondere unter extremen Situationen, beispielsweise bei einem Unfall, sehr große Kräfte in Längsrichtung auftreten können. Auch derartige Kräfte müssen von der Fahrgastsitz-Konstruktion aufgenommen werden können, und zwar zudem noch so, daß ein allmählicher Abbau dieser Kräfte durch gezielte Deformierung der Fahrgastsitze erreicht und damit Verletzungen der Passagiere weitgehend vorgebeugt wird. Gerade die Aufnahme solcher Längskräfte erfolgt durch diese auf den Stützfüßen angebrachten Profilstäbe, auf die also neben den Gewichtskräften auch Längskräfte und dadurch bedingt auch Torsionskräfte einwirken.

Neben diesen Festigkeitsanforderungen bestehen noch Forderungen hinsichtlich der Wirtshaftlichkeit, und zwar sowohl bei der Herstellung der Fahrgastsitze, wie auch bei deren Gebrauch. Fahrgastsitze stellen stets Totgewicht bei Fahrzeugen dar, Gewicht also, das, gleichgültig ob der Fahrgastsitz benutzt wird oder nicht, stets vom Fahrzeug aufgenommen werden muß. Fahrgastsitze müssen also einfach herstellbar und trotz der geforderten Festigkeit auch leicht sein.

Einen großen Fortschritt hinsichtlich dieser Anforderungen stellt ein in der EP-A-0 042 565 beschriebener Fahrgastsitz dar, bei dem anstatt schwerer die Stützfüße überbrückender Schienen verhältnismäßig leichte Profilstäbe eingesetzt werden. Bevorzugt werden bei dieser Konstruktion Doppel-C-Profile, deren Steg etwa parallel zur Sitzplattenebene angeordnet ist. Diese Profilstäbe sind zwar leicht und einfach und damit wirtschaftlich herstellbar, genügen auch dem Anforderungen, die durch die Gewichtskräfte gestellt werden, können jedoch in Extremfällen die auftretenden Längs- und Torsionskräfte nicht aufnehmen.

Die Erfindung zeigt auf, wie durch Einsatz besonderer Holme eine ausreichende Festigkeit derartiger Fahrgastsitze bei wirtschaftlicher Herstellungsmöglichkeit und leichtem Aufbau erreicht werden kann. Möglich ist dies dadurch, daß die Holme als Kastenholme ausgebildet sind, an denen Befestigungsmittel zum Befestigen auf den Stützfüßen und zum Anbringen der Sitztelle angebracht sind.

Nicht mehr also wie bisher werden als Holme schwere Befestigungsschienen vorgesehen, sondern durch ihre Bauweise bedingt leichte und trotzdem äußerst feste Kastenholme, also in sich geschlossene Träger, sie in der Lage sind, nicht nur die Gewichtskräfte und Längskräfte, sondern auch Torsionskräfte aufzunehmen. Dadurch ist sowohl der oben angeführten Wirtschaftlichkeitsforderung wie auch der Anforderung an die Festigkeit dieser Konstruktionsteile Rechnung getragen. Werden zudem die Kastenholme im Strangpreß/verfahren hergestellt, so ist auch deren Herstellung äußerst wirtschaftlich möglich.

Die Kastenholme nach der Erfindung müssen nicht aus zwei Gurten und zwei Stegen bestehende Vierkantrohre sein, obwohl diese Form selbstverständlich nicht ausgeschlossen ist. Es können auch Kastenholme Verwendung finden, die eine Mehrzahl von Gurten und Stegen aufweisen. Die Bauart der Kastenholme richtet sich hierbei auch nach dem für diese Holme verwendeten Material, für das vorzugsweise Leichtmetall oder auch Kunststoff vorgeschlagen wird. Durchaus können hierbei die Wandstärken der einzelnen Gurte und Siege, je nach Material und Krafteinleitung, unterschiedlich sein.

Die Kastenholme sind oberund/oder unterseitig einstückig mit Befestigungsschienen verbunden, wobei insbesondere oberseitig und/oder unterseitig offene, im Querschnitt C-förmige. Profilschienen vorgeschlagen werden.

Auf der Zeichnung sind schematisch Kastenholm-Ausführungen nach der Erfindung dargestellt, und zwar zeigen:

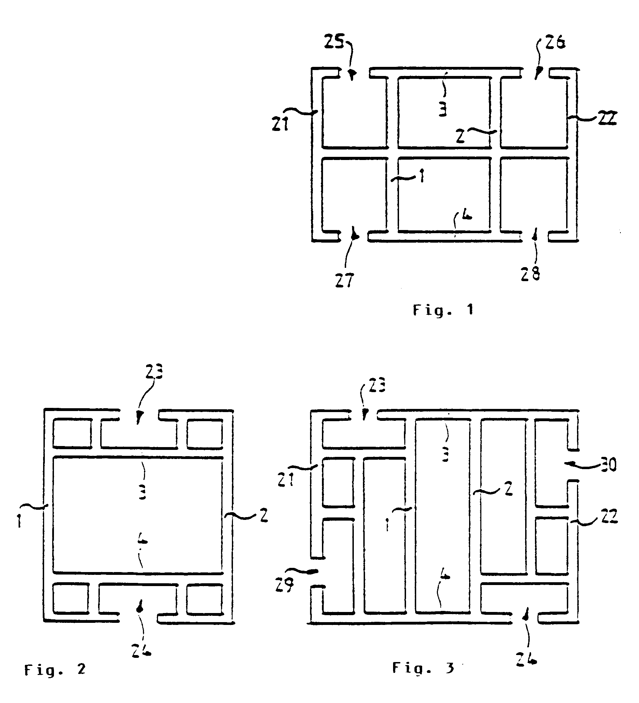

- Fig. 1 bis Fig. 3: Kastenholme mit C-förmigen Befestigungsschienen.

Sämtliche, in den Fig. 1 bis 3 dargestellten Kastenholme sind einschließlich der Befestigungsstege beziehungsweise Befestigungsschienen im Strangpreßverfahren hergestellt. Diese Herstellart ist, bei den großen zu fertigenden Stückzahlen, äußerst wirtschaftlich und läßt zudem eine gleichbleibende Qualität erwarten.

Fig. 1 zeigt einen Kastenholm, der bei den Außenkanten jeweils im Querschnitt C-förmige Befestigungsschienen (25, 26, 27, 28) aufweist. In diese Befestigungsschienen (25, 26, 27, 28) können entsprechend geformte Gewindesteine eingeschoben werden, wodurch eine außerordentliche Freizügigkeit bei der Befestigung der Stützfüße und der Sitztelle erreicht wird. Eine ähnliche Ausführung zeigt Fig. 2, wobei lediglich je eine im Querschnitt C-förmige Befestigungsschiene (23, 24) auf der Ober- und Unterseite des Kastenholms (1, 2, 3, 4) vorgesehen sind. Fig. 3 schließlich zeigt eine Ausführung, ebenfalls mit zwei im Querschnitt C-förmigen Befestigungsschienen (23, 24), die jedoch diametral gegenüberliegen und insbesondere dann Verwendung finden, wenn die Befestigungspunkte der Stützfüße näher beieinander liegen als diejenigen der Sitztelle. Außerdem weist dieser Kastenholm auch noch seitliche C-förmige Befestigungschienen (25, 26) auf, die auch noch die Befestigung von Sitzelementen an den Seitenwänden dieses Kastenholms zulassen.

## Patentansprüche

1. Fahrgastsitz zum Einbau in Land-, Wasser- und Luftfahrzeuge, gebildet aus einem Sitzuntergestell, bestehend aus beidseitigen Stützfüßen, auf denen ein aus mindestens zwei Profilstäben gebildeter Querbügel befestigbar ist, auf dem ein Sitzteil und ein mit ihm starr oder verschwenkbar verbundenes Rückenteil angebracht ist, wobei die Profilstäbe aus mindestens zwei Gurten (1, 2) und einem Steg (3, 4) gebildete Holme sind, die mit Befestigungsstegen versehen sind,
dadurch gekennzeichnet,
daß die Holme in sich geschlossene, als Strangpreßteile ausgebildete Kastenholme (1, 2, 3, 4) sind und die Befestigungsstege sich nach außen erstreckende, mit dem Kastenholm einstückig verbundene Profilteile sind, welche als Befestigungsschienen mit Nuten (23, 24, 25, 26, 27, 28, 29, 30) ausgebildet sind, die somit nach außen offene, im Querschnitt C-förmige Profilschienen bilden, die mit den Kastenholmen ober- und/oder unterseitig und/oder an ihren Seitenflächen verbunden sind.

2. Fahrgastsitz nach Anspruch 1,
dadurch gekennzeichnet,
daß die Kastenholme aus einer Mehrzahl von Gurten (1, 2, 21, 22) und Stegen (3, 4) gefügt sind.

3. Fahrgastsitz nach einem
der Ansprüche 1 oder 2,
dadurch gekennzeichnet,
daß die Wandstärken der Gurte (1, 2, 21, 22), Stege (3, 4) und Befestigungsschienen (23, 24, 25, 26, 27, 28, 29, 30) unterschiedlich sind.

4. Fahrgastsitz nach einem
der Ansprüche 1 bis 3,
dadurch gekennzeichnet,
daß die Kastenholme aus Leichtmetall sind.

5. Fahrgastsitz nach einem
der Ansprüche 1 bis 3,
dadurch gekennzeichnet,
daß die Kastenholme aus Kunststoff sind.

## Claims

1. A passenger seat for installation in land, water and air vehicles, formed from a seat subframe comprising support legs on both sides, on which can be fixed a transverse tie sructure which is formed from at least two profile bars and on which is mounted a seat portion and a back portion connected thereto rigidly or pivotably, wherein the profile bars are beam members which are formed from at least two chords (1, 2) and a web (3, 4) and which are provided with fixing limbs, characterised in that the beam members are in the form of box beam members (1, 2, 3, 4) which are closed in themselves and which are in the form of extruded portions and the fixing limbs are outwardly extending profile portions which are integrally connected to the box beam member and which are in the form of fixing rails with grooves (23, 24, 25, 26, 27, 28, 29, 30) and which thus form outwardly open shaped rails which are of C-shaped cross-section and which are connected to the box beam members at the top side and/or the bottom side and/or at their side surfaces.

2. A passenger seat according to claim 1 characterised in that the box beam members are assembled from a plurality of chords (1, 2, 21, 22) and webs (3, 4).

3. A passenger seat according to one of claims 1 and 2 characterised in that the wall thicknesses of the chords (1, 2, 21, 22), webs (3, 4) and fixing rails (23, 24, 25, 26, 27, 28, 29, 30) are different.

4. A passenger seat according to one of claims 1 to 3 characterised in that the box beam members are of light metal.

5. A passenger seat according to one of claims 1 to 3 characterised in that the box beam members are of plastics material.

## Revendications

1. Siège de passager destiné à être monté dans des véhicules terrestres, aquatiques et aériens, constitué par un bâti de siège composé de pieds d'appui situés des deux côtés et sur lesquels peut être fixé au moins un étrier transversal qui est formé par deux barres profilées au moins et sur lequel sont montées une partie de siège et une partie de dossier reliée à celle-ci de manière rigide ou pivotante, les barres profilées étant des longerons qui sont constitués par au moins deux membrures (1, 2) et une semelle (3, 4) et qui sont munis d'ailes de fixation, caractérisé par le fait que les longerons sont réalisés sous la forme de longerons en caisson (1, 2, 3, 4) qui sont fermés sur eux-mêmes et qui sont réalisés sous la forme de pièces extrudées, et que les ailes de fixation sont des pièces profilées qui s'étendent vers l'extérieur, qui sont reliées d'un seul tenant au longeron en caisson et qui sont réalisées sous la forme de rails de fixation (23, 24, 25, 26, 27, 28, 29, 30) présentant des rainures, ceux-ci formant ainsi des rails profilés en forme de C en section transversale qui sont ouverts vers l'extérieur et qui sont reliés aux longerons en caisson sur leurs côtés supérieurs et/ou sur leurs côtés inférieurs et/ou sur leurs surfaces latérales.

2. Siège de passager selon la revendication 1, caractérisé par le fait que les longerons en caisson sont composés d'une pluralité de membrures (1, 2, 21, 22) et de semelles (3, 4).

3. Siège de passager selon l'une des revendications 1 et 2, caractérisé par le fait que les épaisseurs des parois des membrures (1, 2, 21, 22), des semelles (3, 4) et des rails de fixation (23, 24, 25, 26, 27, 28, 29, 30) sont différentes.

4. Siège de passager selon l'une des revendications 1 à 3, caractérisé par le fait que les longerons en caisson sont en métal léger.

5. Siège de passager selon l'une des revendications 1 à 3, caractérisé par le fait que les longerons en caisson sont en matière plastique.
